(19)

Europäisches
Patentamt
European
Patent Office
Office européen
des brevets

(11) **EP 1 921 470 A2**

(12) **EUROPEAN PATENT APPLICATION**

(43) Date of publication:
**14.05.2008 Bulletin 2008/20**

(51) Int Cl.:
**G02B 1/11** (2006.01)

(21) Application number: **07119949.1**

(22) Date of filing: **05.11.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(30) Priority: **08.11.2006 JP 2006302710**
**19.07.2007 JP 2007187951**
**09.10.2007 JP 2007262897**

(71) Applicant: **Nissan Motor Co., Ltd.**
**Kanagawa 221-0023 (JP)**

(72) Inventors:
• **Kuroda, Motohiko**
**Atsugi-shi Kanagawa 243-0192 (JP)**
• **Noguchi, Yuji**
**Atsugi-shi Kanagawa 243-0192 (JP)**
• **Fukui, Takayuki**
**Atsugi-shi Kanagawa 243-0192 (JP)**

(74) Representative: **Holmes, Matthew William et al**
**Nissan Motor Manufacturing (UK) Ltd**
**Intellectual Property Department**
**Nissan Technical Centre Europe**
**Cranfield Technology Park**
**Cranfield, Bedfordshire MK43 0DB (GB)**

(54) **Water Repellent Anti-Reflective Structure and Method of Manufacturing the Same**

(57)    A water repellent anti-reflective structure with a superior water repellent function and an anti-reflective function, a method of manufacturing the same, and components of vehicles comprising the water repellent anti-reflective structure (e.g., display or window panel) are taught. Numerous cone-shaped projections having a circular or polygonal bottom surface and a diameter of a circular bottom surface or a circle circumscribing with a polygonal bottom surface within a range between 50 and 380 nm are configured to be arranged at a pitch within a range between 50 and 380nm, having an aspect ratio within a range greater than or equal to 1.5 and made from material having a contact angle with water equal to or greater than 90°.

**FIG. 1A**

**EP 1 921 470 A2**

**(Cont. next page)**

**FIG. 1B**

**Description**

This invention relates to water repellent and anti-reflective structures and methods of manufacturing thereof that are applicable to, for example, construction materials, various types of wind panels for vehicles, ships, aircrafts, and display devices such as low reflective water repellent panels. Aspects of the invention relate to a structure, to a body, to a method, to a vehicle component and to a vehicle.

Water repellent surfaces are known that make easy removal of water from such surfaces. Japanese Laid-Open Patent Publication No. 2006-178147 discloses a surface of a subwavelength grating having a low surface energy. The subwavelength grating is two-dimensional with a grating period shorter than the wavelength of the used light. Such a subwavelength grating provides water repellent property by coating the surface. However, in the subwavelength grating structure disclosed therein, combining true anti-reflective properties and water repellency is difficult. For example, while trying to improve water repellency, anti-reflectiveness is often reduced due to thickness of the coating.

There is therefore a need for a water repellent structure that has improved anti-reflective properties while retaining its durability.

It is an aim of the invention to address this issue and to improve upon known technology. Embodiments of the invention may optimize water repellency by increasing surface area and surface tension while maintaining good anti-reflective properties and durability. Other aims and advantages of the invention will become apparent from the following description, claims and drawings.

Aspects of the present invention therefore provide a structure, a body, a method, a vehicle component and a vehicle as claimed in the appended claims.

According to another aspect of the invention for which protection is sought, there is provided a water repellent anti-reflective structure, comprising a material with a contact angle with water of at least 90˚, numerous cone-shaped projections formed of the material, the cone-shaped projections having a circular or polygonal bottom surface with a diameter between 50 and 380 nm and a height, wherein the cone-shaped projections are arranged at a pitch between 50 and 380 nm and wherein the height is such that an aspect ratio of the cone-shaped projections is 1.5 or greater.

In an embodiment, the material has a contact angle with water of at least 110˚.

In an embodiment, the aspect ratio of the cone-shaped projections is equal or greater than 2.

In an embodiment, the aspect ratio of the cone-shaped projections is between 2 and 3.

In an embodiment, the material comprises a base material layered with the material with a contact angle with water of at least 90˚.

In an embodiment, the cone-shaped projections are squarely arranged or hexagonally arranged.

In an embodiment,, when a base of a perpendicular cross-section through an apex of a cone-shaped projection is taken on an X-axis and the apex thereof is taken on a Z-axis, a z-coordinate value on a ridge line of the cone-shaped projection is indicated by an equation:

$$Z = H - \{H/(D/2)n\} \times Xn \; ;$$

wherein:

H is a height of the cone-shaped projection;
D is a diameter of a bottom surface of the cone-shaped projection; and
n is between 1.1 and 5.

According to a further aspect of the invention for which protection is sought, there is provided a water repellent anti-reflective structure body, comprising the water repellent anti-reflective structure according to claim 1 and at least one substrate, wherein the water repellent anti-reflective structure is arranged on at least one surface of said substrate. The substrate may be transparent.

According to a still further aspect of the invention for which protection is sought, there is provided a method of manufacturing the water repellent anti-reflective structure described above, the method comprising forming the cone-shaped projections on the material by a hot embossing process.

The method may comprise interposing a resin between a mold and the material, wherein the mold comprises an inverted structure of the cone-shaped projections and hardening the resin by irradiating an active energy beam on the interposed resin.

According to yet another aspect of the invention for which protection is sought, there is provided a component of a vehicle comprising a water repellent anti-reflective structure as set out herein.

Embodiments of the invention may provide a water repellent anti-reflective structure with a superior water repellent property, a water repellent anti-reflective structure body including such a structure, a method of manufacturing such a water repellent anti-reflective structure and vehicular components including such a water repellent anti-reflective structure (e.g., display or window panel).

Embodiments of the invention may use a material having a contact angle with water equal to or greater than 110˚ as a material for constituting a surface of a cone-shaped projection for performing an anti-reflective property, while defining an aspect ratio of the cone-shaped projection.

Further, an embodiment of the water repellent anti-reflective structure taught herein comprises numerous cone-shaped projections arranged at a pitch within a range between 50 and 380nm. The cone-shaped projections can have a circular or polygonal bottom surface. Also, a diameter of a circular bottom surface or a diameter of a circle circumscribing with a polygon, which forms a bottom surface, can be within a range between 50 and 380nm. Aspect ratios of the cone-shaped projections for this embodiment are within a range between 1.5 and 3, whereas a contact angle between a material for constituting at least a surface of the cone-shaped projections and water is equal to or greater than 110˚.

An embodiment of a water repellent anti-reflective structure body taught herein comprises the above-mentioned water repellent anti-reflective structure on at least one surface of a substrate.

Further, methods of manufacturing a water repellent anti-reflective structure body are taught herein. One such method of manufacturing comprises the steps of preparing a mold (stamper) configured to invert the cone-shaped projections in such a water repellent anti-reflective structure; irradiating an active energy beam when forming such a cone-shaped projection on a surface of the substrate by a hot embossing process or sandwiching an active energy beam hardened resin between the mold and the substrate and forming the cone-shaped projection of the water repellent anti-reflective structure on a surface of the substrate.

According to embodiments taught herein, an anti-reflective function of light is performed by numerous cone-shaped projections arranged with a pitch that is smaller and shorter than a wavelength of a visible ray. Simultaneously, an aspect ratio of the cone-shaped projection is within a range between 1.5 and 3. Further, a material for constituting at least a surface of the cone-shaped projection having a contact angle with water equal to or greater than 110˚ is used. That is, as a material for constituting the cone-shaped projection or covering a surface of the cone-shaped projection, a material having a contact angle with water equal to or greater than 110˚ is used. Accordingly, the anti-reflective property and the water repellent property can be combined to thereby obtain a panel with such properties.

As detailed herein, a structure is disclosed that increases water repellency while improving the anti-reflective property at the same time. As a result of testing by the inventors, an unexpectedly super repellent and super anti-reflective structure has been discovered. Embodiments of the water repellent anti-reflective structures taught herein are described below with reference to the drawings.

Within the scope of this application it is envisaged that the various aspects, embodiments, examples, features and alternatives set out in the preceding paragraphs, in the claims and/or in the following description may be taken individually or in any combination thereof.

The present invention will now be described, by way of example only, with reference to the accompanying drawings in which:

FIGS. 1(A) and 1(B) are front and plan views showing a water repellent and anti-reflective structure;

FIG. 2 illustrates the relationship between the contact angle of the material with water and the water repellency of the material;

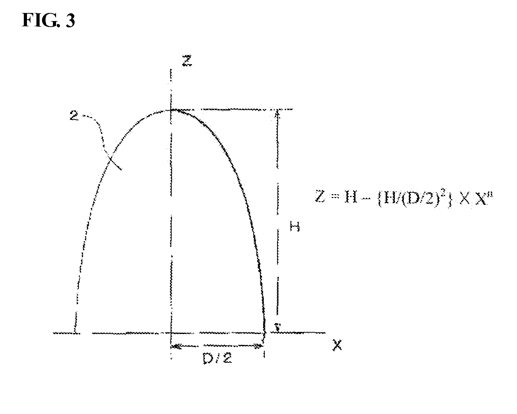

FIG. 3 illustrates a ridge line of a cone-shaped projection of the water repellent anti-reflective fine structure with $n^{th}$ order Equation (1); and

FIG. 4 illustrates how the aspect ratio of a projection contributes to the water repellency of the structure using material with varying contact angle properties.

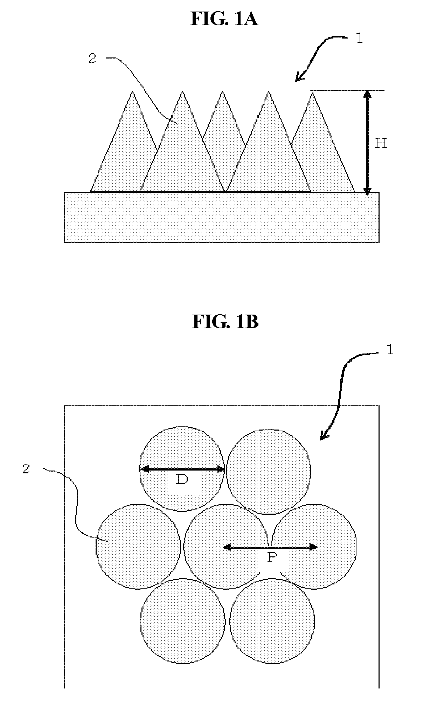

FIGS. 1(A) and 1(B) are front and plan views depicting in general the water repellent and anti-reflective structure taught herein. A water repellent anti-reflective structure 1 shown in FIG. 1(A) comprises numerous cone-shaped projections 2 having circular or polygonal bottom surfaces with diameters of 50 to 280nm, the diameter being smaller than the wavelength of a visible ray. FIG. 1(B) illustrates the circular bottom surfaces and the diameter D and pitch P. Since such cone-shaped projections are arranged at a pitch P of 50 to 380nm, which is also smaller than the wavelength of visible ray, the refractive index across the thickness of the structure is not rapidly changed. The refractive index is determined from the thickness of each section of material in a cross section of the structure. Further, since the refractive index is linearly changed from 1.0, the refractive index of air,to a refractive index of the material in a moderate shape, the light incident on the water repellent anti-reflective structure 1 is emitted straight without generating any diffraction or reflection. This reduces the reflectivity of the light on the incident surface.

While the fine structure comprised of the cone-shaped projections is anti-reflective, it also provides water repellency characteristics. By forming a fine structure comprised of the numerous cone-shaped projections on the planar surface of the structure, both the surface area and the surface tension are increased. By increasing the surface area and surface tension, the structure becomes water repellent. The water repellent function can be further improved by forming an air layer between the cone-shaped projections and a water droplet, with the air impeding attachment of the droplet.

Referring to FIG. 1(B) in more detail, the diameter of the bottom surface of the cone-shaped projection 2 is indicated as D. D may also indicate the diameter of a circle circumscribing a polygon when the bottom surface is polygonal. The diameter D is predetermined to be equal to or less than the wavelength of a visible ray, specifically, within the range of 50 and 380nm and preferably between 50 and 250nm. It has been found that when the diameter D is greater than 380nm, diffusion or diffraction occurs, causing an increase in light reflectivity. Further, when the diameter D is smaller than 50nm, it is very difficult to evenly and industrially produce such a fine structure.

The pitch P of the cone-shaped projection 2 is specifically defined as a distance between apexes or a distance between the centers of gravity of the bottom surfaces (which is identical to the center when the shape is circular). To achieve the anti-reflective property of the surface, the pitch P must be equal to or less than the wavelength of a visible ray, specifically between 50 and 380nm and preferably between 50 and 250nm. When the pitch P is greater than 380nm, diffusion or diffraction deteriorates the anti-reflective property. When the pitch P is smaller than 50nm, it is difficult to manufacture the structure. When diameter D equals pitch P, the cone-shaped projections 2 are most densely arranged.

FIGS. 1(A) and (B) show a circular cone-shaped projection 2 constituting an embodiment of the water repellent anti-reflective structure 1. However, the shape of the cone-shaped projection 2 of the invention may include a true circular cone (generatrix is straight) or pyramidal shape (corner is straight and side is planar), as well as a circular cone having a curved generatrix or a pyramidal shape having a curved side surface, as long as a cross-sectional area of the projection is gradually reduced from the bottom surface to the tip side. Further, when considering the formability or breakage-resistance, the shape of the tip side of the cone-shaped projection may be truncated with a planar or rounded tip.

The straight line connecting the center of the bottom surface of the cone-shaped projection 2 with the apex (a center point of an upper surface of the truncated cone-shaped projection) is not necessarily perpendicular to the bottom surface. That is, it may be inclined as long as the aspect ratio value is satisfied.

As such, the term "circular cone" used herein means not only a true circular cone or pyramid, but also shapes such as, for example, a modified circular cone (e.g., shape of temple bell or hammer), a modified pyramid shape with a curved side surface, a truncated cone or pyramid shape without a tip projection and an inclined shape. Similarly, the shape of the bottom surface of the cone-shaped projection 2 may include a circular shape or polygonal shape as long as the necessary parameters are satisfied. However, to decrease the average reflectivity, the circular shape of the bottom surface is optimal.

The ridge line of the cone-shaped projection 2 (i.e., generatrix of cone-shaped projection) or the line connecting the apex of the cone-shaped projection and the apex of the polygonal bottom surface can be configured to be a shape indicated by linear Equation 1 (wherein n = 1.1 to 3), shown below. With such a ridge line, the ratio of the refractive index change from the apex of the fine structure to the bottom surface is even, thereby improving the anti-reflective function.

$$Z = H - \{H/(D/2)n\} \times Xn \qquad (1)$$

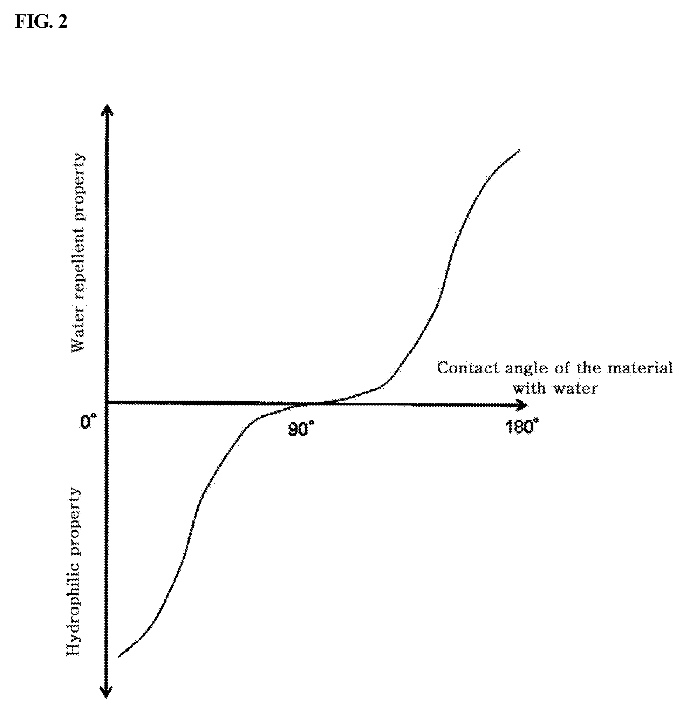

For example, if a base of a perpendicular cross section via the apex of the cone-shaped projection 2 is taken on an X-axis and the apex thereof is taken on a Z-axis, a z-coordinate value on the ridge line can be indicated as shown in FIG. 2 on the basis of Equation 1. In such a case, it can be revised by adding a constant term depending on a position of the apex.

As long as the above parameters are satisfied, the cone-shaped projection 2 may be in a regular arrangement or in an irregular random arrangement. Also, more than two types of the fine structure, having different projection shapes, may be integrated on a surface. Uniformity of the structure wherein the same cone-shaped projections 2 are disposed at regular intervals and in a square or hexagonal arrangement, however, optimizes the anti-reflective function.

To improve water repellency, the material used to form the structure will assist in making the structure further hydrophobic. The contact angle with water of the material is the parameter used to determine the improved water repellency of the structure. The relationship between the contact angle of the material with water and the resulting water repellent property of the structure is illustrated in FIG. 2. That is, when the contact angle of the material with water is equal to or greater than 90°, the material has inherent water repellent property. As shown in FIG. 2, as the contact angle of the material with water increases above 90°, the water repellent property is increased. When the contact angle of the material with water is less than 90˚, the material has no water repellent property. Rather, the material is hydrophilic. Thus, to achieve an improved structure having excellent water repellent properties, material having a contact angle with water equal to or greater than 90˚ is selected to use in forming the structure of cone-shaped projections.

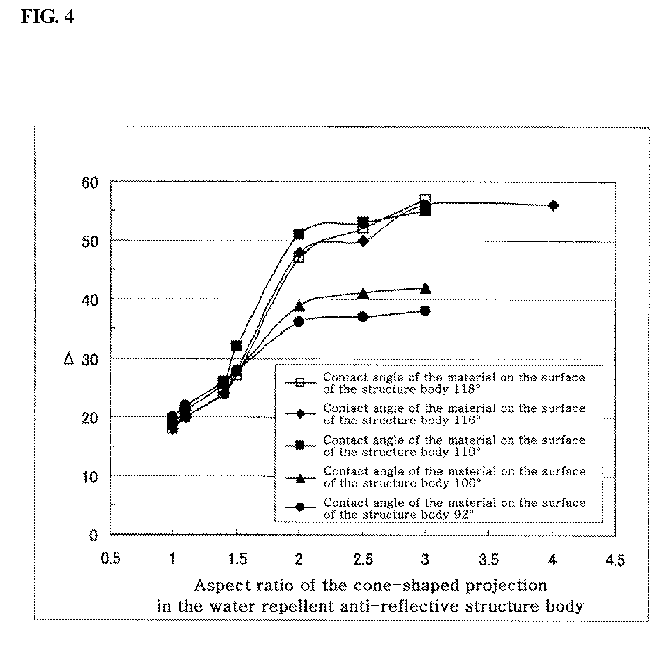

To achieve the desired structure disclosed herein, it is necessary to combine an improved anti-reflective property with the water repellent property in one structure. In developing the structure, an optimal relationship between the water contact angle and the aspect ratio of the cone-shaped projections 2 was unexpectedly discovered. This will be discussed in detail with respect to FIG. 4.

The aspect ratio of the cone-shaped projection 2 is indicated as a ratio (H/D) of a height H of the cone-shaped projection 2 to a diameter D of the bottom surface of the cone-shaped projection 2. It has been found that when the aspect ratio (H/D) of the cone-shaped projection 2 is less than 1.5, it is difficult to form a layer of air between the water drops and the fine structured surface or to ensure the anti-reflective effect. When the aspect ratio (H/D) is 4 or greater, the cone-shaped projection 2 is more vulnerable to breakage by an external force. This reduces the life of the water repellent and anti-reflective structure. Thus, for greatest durability, an aspect ratio equal to or less than 3 is optimal. When optimizing the anti-reflective property, an aspect ratio (H/D) of equal to or greater than 2 provides the optimal anti-reflective property.

With the discovered relationship between a contact angle of greater than 90˚ and an aspect ratio equal to or greater than 1.5, the water repellent property is improved by securely forming a layer of air between the water drop and the fine structure. The resiliency is improved by eliminating breakage, and the anti-reflective properties are increased, providing a structure safer to use in specific circumstances, such as in a vehicle. As a result, the improved anti-reflective and water repellent functions are combined into one functional structure.

To more clearly explain the unexpected improvement in water repellency and anti-reflectivity due to the relationship between aspect ratio of the projections and contact angle of the material, FIG. 4 is discussed. In determining water repellency of the final structure due to varying the surface area and tension through aspect ratios, the graph in FIG. 4 resulted. Initial results with aspect ratios of 1.0 to 1.4 indicated a linear relationship between aspect ratio and resulting improvement in water repellency of the structure. The resulting improvement is depicted in FIG. 4 on the y-axis and represented by "Δ", the difference between the contact angle of the material alone and the contact angle of the resulting structure after projections have been formed. This linear relationship appeared to be unaffected by the contact angle of the material used to form the structure.

As shown in FIG. 4, when the aspect ratio of the cone-shaped projection in the water repellent anti-reflective structure is equal to or greater than 1.5, "Δ" the contact angle increase of the water repellent anti-reflective structure, is rapidly increased. When material with a contact angle of between 90˚ and 110˚ is used to form a structure with projections with aspect ratios greater than 1.5, an unexpected non-linear relationship occurs, resulting from the greater than expected increase in the contact angle of the resulting structure.

As further shown in FIG. 4, a more particular improvement in water repellency is seen when material with a contact angle greater than 110˚ is used to form the structure with projections with aspect ratios greater than 1.5, and in particular greater than 2.0.

Although FIG. 4 does not include any data for anti-reflectivity, Table 1 contains results from embodiments described in FIG. 4. As seen in Table 1, anti-reflective property of the structures with aspect ratios over 1.5 showed particularly good improvement, that improvement increasing as the contact angle of the material increases. Table 1 is described in more detail below.

It should be noted that in the embodiments of the water repellent anti-reflective structure taught herein, the particular contact angle of equal to or greater than 90˚ for the material was determined for water, such as rain drops. However, when an water repellent anti-reflective structure taught herein comes in contact with liquid other than water (e.g., structures used as a lens surface of endoscope, an observation window panel of a reactor vessel or a distillation column of various plant devices), it is necessary to determine the optimum contact angle for each particular liquid.

Methods of molding the cone-shaped projection when manufacturing the water repellent anti-reflective structure of the invention may include, but are not limited to, for example, heat pressing processes (hot embossing processes) and injection molding processes. In particular, a method of easily molding a fine structure equal to or less than the wavelength of light is a nano imprinting process, which may utilize heat or active energy beams. Heat is is employed to transfer the cone-shaped projection above to a thermoplastic resin by heating the resin and pressing a mold. Further, the use of the active energy beam is implemented to add polymer, oligomer or monomer into the mold. An active energy beam, such as ultraviolet ray or X-ray, irradiates so as to polymerize the polymer, oligomer or monomer. The method includes the use of heating and pressing equipment. However, it is preferable to include equipment that is capable of irradiating the active energy beam from the top of a light transmitting stamper. Regarding stamping the mold, the method of manufacturing is not specifically limited as long as the method can form the fine cone-shaped projections as detailed above.

The stamper has a fine pattern to be irradiated. Methods of forming a pattern on the stamper may include, but are not limited to, for example, photolithography or electron beam lithography, depending on a manufacturing precision.

The stamper may be a material having the strength or workability with the required precision, such as silicon wafer, metallic materials, glass, ceramic, plastic, carbon materials, etc. Specifically, the material of the stamper may include Si, SiC, SiN, polycrystalline Si, glass, Ni, Cr, Cu, C or a material including at least one of such materials.

A material adapted to form the structure of the embodiments taught herein is one capable of providing a fine structure comprising the cone-shaped projection by any one of the above methods. For example, the materials may include thermoplastic resin such as polyethylene, polypropylene, polyvinylalcohol, polyvinylidene chloride, polyethylene terephthalate, polyvinyl chloride, polystyrene, ABS resin, AS resin, acryl resin, polyamide, polyacetal, polybutylene terephthalate, glass reinforced polyethylene terephthalate, polycarbonate, modified polyphenylene ether, polyphenylene sulfide, polyether ether ketone, liquid crystalline polymer, fluorine resin, polyarete, polysulfone, polyether sulfone, polyamide-imide, polyetherimide, and thermoplastic polyimide; and a thermosetting resin such as phenol resin, melamine resin, urea resin, epoxy resin, unsaturated polyester resin, alkyd resin, silicon resin, diallyl phthalate resin, polyamide bismaleimide and polybisamidethoriazol; or a material for blending two or more types selected from the above materials. In particular, material having transparency can be appropriately adopted for a cover of a window (windshield) or metering devices.

When using the active energy beam, a resin capable of initiating polymerization by the active energy beam is adopted. Such a resin may include, but is not limited to, an ultraviolet ray hardened acrylic urethane-based resin, ultraviolet ray hardened polyester acrylate-based resin, ultraviolet ray hardened epoxy acrylate resin, ultraviolet ray hardened polyolacrylate resin and ultraviolet ray hardened epoxy resin. A hardening agent such as isocyanate can be added to achieve more rigid hardening.

Further, the active energy beam adopted herein may include, but is not specifically limited to, an ultraviolet ray, X-ray, electron ray and electromagnetic wave.

In embodiments of the invention, when the contact angle of a chosen material with water is not greater than or equal to 90˚, the material used to make the projections may be coated with a material meeting the contact angle requirement of 90˚.

The method of coating the surface as mentioned above is not specifically limited as long as the method does not deform the fine concavo-convex structure formed by the cone-shaped projections with the coating materials. Thickness of the coating may be in the range of 5 to 30nms. Methods of coating may include, but are not limited to, an LB method, a PVD method, a CVD method, a self-structuring method, a sputter method and a method of applying a material that dilutes a single molecule with a solvent.

A water repellent material adopted for such a coating process to achieve a contact angle with water of at least 90˚, for example, may include long-chain alkoxysilane, fluoro alkoxysilane, polydimethylsiloxane and the like.

Optionally, it is possible to form the coating on the structure by performing a water repellent process to achieve a desired thickness of the materials on a flat plate prior to forming the cone-shaped projections. Methods of forming a coating on the water repellent anti-reflective structure comprising the cone-shaped projections may include, but are not limited to, for example, forming directly on the base material, as well as producing a thin film by applying an easily moldable material with a refractive index that is the same as the base material and then transferring the above cone-shaped projection thereto.

When incorporating a molded article into a display device, it is most efficient to apply such a structure to a foremost surface. When such a structure is applied to at least one surface, a conventional anti-reflection method may be applied to a back surface without changing the contact angle of the foremost surface.

Such an anti-reflection method may include, for example, using an anti-reflective structure as the substrate and applying to it a fine structure equal to or less than the wavelength of a light, or interfering with the reflective light on a thin film surface and a substrate adhering surface by controlling the film thickness of an anti-reflective layer to thereby counter the reflective light.

In embodiments of the water repellent anti-reflective structure, the water repellent anti-reflective structure is formed on at least one surface of the material. However, it is preferable to form the structure on both an incident surface of the light and an outgoing surface of transmitted light.

Embodiments of the molded article comprising the water repellent anti-reflective structure taught herein are adopted, for example, for use as a meter panel of a vehicle or motorbike, a mobile device (e.g., mobile phone, electronic scheduler, etc.) and a display device (e.g., signboard, watch, etc.), which require water repellent capabilities.

The display device may include, but is not limited to, for example, a system for combining a mechanical display and a lighting device such as an analogue meter, a system for using a liquid crystal, a backlight such as LED, EL, or a light emitting surface such as a digital meter or a monitor, or a system for using a liquid crystal in a reflective system such as a mobile device.

Since such a molded article is used at places where light is present, it is preferable to add an ultraviolet absorber, an antioxidant or a radical supplement to the material in order to prevent any deterioration by the light. Further, a bluing agent or a fluorescent chromogenic pigment for curtailing yellowing by resin deterioration may be adopted.

The water repellent anti-reflective structure disclosed herein significantly reduces light reflection. Further, by applying the structure to a vehicle as well as various components (e.g., meter cover, windshield, etc.), the reflection of outdoor scenery and interior decoration can be prevented. Simultaneously, removing contamination from the structure is improved by its superior water repellent property imparted by the discovered relationship between the aspect ratio and the contact angle of the material used.

The invention is further explained with respect to the embodiments described below. However, it should be noted that the invention is not limited to the following embodiments. Further, "%" for concentration or content indicates a mass percentage, unless indicated otherwise.

A first embodiment is now described. By using commercially available electron beam lithography, a stamper is manufactured wherein cone-shaped concave portions having an opening diameter of 250nm and a depth of 375nm are squarely arranged at a pitch of 250nm. By using such a stamper, a water repellent anti-reflective structure is transferred to both surfaces of an acryl plate having a thickness of 2 mm, wherein the water repellent anti-reflective structure comprises cone-shaped projections (aspect ratio: 1.5) with a bottom surface diameter D of 250nm, a height H of 375nm and squarely arranged at a pitch P of 250nm. By performing a CVD process with fluoroalkylsilane (FG-5010 available from Fluoro Technology, contact angle of 118˚) on such a surface, the water repellent anti-reflective structure according to the first embodiment is obtained.

Regarding the water repellent anti-reflective structure of the first embodiment, the anti-reflective function, contact angle with water, water repellent property and durability are evaluated as follows.

To evaluate the anti-reflective function, reflectivity must be measured. A reflectivity at an incident angle of 0˚ was measured for a mirror side aluminum as a standard sample by using a variable angle spectrophotometer (an automatic device for measuring visible near-infrared variable angle available from Otsuka Electronics) with respect to each wavelength of 380 to 780nm. Then, an average reflectivity was calculated from the spectrum, which is obtained by multiplying the measured reflectivity as above by a standard correction coefficient.

To evaluate the contact angle of water, water of 10 $\mu$L is deposited on a surface of the sample by a syringe using a contact angle meter (CA-X available from Kyowa Interface Science Co., Ltd.). Then, the contact angle is metered 5 times and an average value thereof is considered to be the contact angle.

The water repellent function, based on a method prescribed in JIS L1092, is evaluated by using a spray tester (available from Tokyo Seiki) with the standards described below:

◎: droplet is not attached to a surface;
○: attaching surface is semi-spherical; and
X: droplet is attached to a surface.

To evaluate durability, a slide movement is performed 100 times by using a surface property tester (available from HEIDON) under the conditions of a broadcloth as an abrasion cloth, load of 1 N, and 30 round trip/min of slide speed. Accordingly, the durability is evaluated the same as the water repellent property evaluation, meaning the water repellent evaluation is performed after the slide movement is performed. The same symbols are used to reflect the resulting water repellency as shown above.

The average reflectivity within the visible ray range (380 to 780nm) of the water repellent anti-reflective structure of the first embodiment is 0.65%. Further, the contact angle with a water drop on the surface of the water repellent anti-reflective structure is 145˚. The water repellent property evaluation as well as the durability is "◎", indicating the droplet is not attached to the surface and the structure has excellent water repellent properties before and after the durability test. Such results are indicated in Table 1.

A second embodiment is made as follows. By using commercially available electron beam lithography, a stamper is manufactured wherein cone-shaped concave portions having an opening diameter of 250nm and a depth of 375nm are hexagonally and most densely arranged at a pitch of 250nm. By applying an ultraviolet ray hardened acryl monomer to the stamper and then irradiating ultraviolet ray thereto, an anti-reflective structure is transferred to both surfaces of an acryl plate having a thickness of 2 mm. The anti-reflective structure comprises cone-shaped projections (aspect ratio: 1.5) having a bottom surface diameter D of 250nm, a height H of 375nm and hexagonally arranged at a pitch P of 250nm. Further, by performing a water repellent process via a vacuum deposition method (NANOS B available from T & K Company; a contact angle of 116˚) on such surfaces, the water repellent anti-reflective structure according to this second embodiment is obtained.

Also, the same performance evaluation is performed for the water repellent anti-reflective structure as mentioned above. As a result, the average reflectivity is 0.68% and the contact angle of water drop on a surface of the water repellent anti-reflective structure is 144˚. The water repellent property as well as the durability is "◎". Further, by varying the depth of the stamper using the same method, the water repellent anti-reflective structure bodies having an aspect ratio of 2.5 (fourth embodiment), 3.0 (fifth embodiment) and 4.0 (sixth embodiment) are tested for results. Such results are indicated in Table 1.

A third embodiment is made as follows. By using commercially available electron beam lithography, a stamper is manufactured wherein cone-shaped concave portions having an opening diameter of 250nm, a depth of 500nm and a shape of a ridge line indicated by Formula 1 (n = 1.5) are hexagonally and most densely arranged at a pitch of 250nm. By applying an ultraviolet ray hardened acryl monomer to the stamper and then irradiating ultraviolet ray thereto, an anti-reflective structure is transferred to both surfaces of an acryl plate having a thickness of 2 mm. The anti-reflective structure consists of cone-shaped projections (aspect ratio: 2) having a bottom surface diameter D of 250nm, a height H of 500nm and hexagonally arranged at a pitch P of 250nm. Then, by performing the water repellent process via the vacuum deposition method (same as in the second embodiment), the water repellent anti-reflective structure of the third embodiment is obtained.

Using the same performance evaluation, the average reflectivity is 0.09% and the contact angle of water drop on a surface of the water repellent anti-reflective structure is 164˚. The water repellent property as well as the durability is "◎". Such results are indicated in Table 1.

Now described is the seventh embodiment. By using commercially available electron beam lithography, a stamper is manufactured wherein cone-shaped concave portions having an opening diameter of 250nm and a depth of 375nm are hexagonally and most densely arranged at a pitch of 250nm. By using such a stamper, a water repellent anti-reflective structure is transferred to both surfaces of a perfluoroalkyl methacrylate plate having a thickness of 2 mm and a contact angle with water of 110˚. The water repellent anti-reflective structure comprises cone-shaped projections (aspect ratio: 1.5) having a bottom surface diameter D of 250nm, a height H of 375nm and hexagonally and most densely arranged at a pitch P of 250nm. By doing so, the water repellent anti-reflective structure according to the seventh embodiment is obtained.

Using the same performance evaluation, the average reflectivity is 0.71% and the contact angle of water drop on a surface of the water repellent anti-reflective structure is 142˚. The water repellent property as well as the durability is "◎". Further, by varying the depth of the stamper using the same method, the water repellent anti-reflective structure bodies according to the present embodiment having an aspect ratio of 2.0 (eighth embodiment), 2.5 (tenth embodiment) and 3.0 (eleventh embodiment) can be obtained. Such results are indicated in Table 1.

A ninth embodiment is made as follows. By using commercially available electron beam lithography, a stamper is manufactured wherein cone-shaped concave portions having an opening diameter of 250nm and a depth of 500nm are hexagonally and most densely arranged at a pitch of 250nm. By using such a stamper, an anti-reflective structure is transferred to both surfaces of a glass plate having a thickness of 2nm, wherein an average reflectivity is 7% and a contact angle with water is 30˚ when the glass plate is planar. The anti-reflective structure comprises cone-shaped projections (aspect ratio: 2) having a bottom surface diameter D of 250nm, a height H of 500nm and hexagonally and most densely arranged at a pitch p of 250nm. Then, by surface processing CF3(CF2)7(CH2)2Si(OCH3)3 (contact angle: 110˚) via spin coating method, the water repellent anti-reflective structure of the ninth embodiment is obtained.

Using the same performance evaluation, the average reflectivity is 0.41 % and the contact angle with water is 161˚. The water repellent property as well as the durability is "◎". Such results are indicated in Table 1.

A twelfth embodiment is now described. By using commercially available electron beam lithography device, a stamper is manufactured wherein cone-shaped concave portions having an opening diameter of 200nm and a depth of 375nm are squarely arranged at a pitch of 200nm. By using such a stamper, a fine structure is transferred to both surfaces of a fluorine-graft-polymerized acryl plate having a contact angle with water of 100˚ and a thickness of 2mm. The fine structure comprises cone-shaped projections (aspect ratio: 1.5), which have a bottom surface diameter D of 200nm, a height H of 375nm and are squarely arranged at a pitch P of 200nm. By doing so, the water repellent anti-reflective structure according to the twelfth embodiment can be obtained.

Using the same performance evaluation, the average reflectivity is 0.8%, the contact angle of water drop on a surface of the water repellent anti-reflective structure is 128˚, the water repellent property is "O," and the durability is "O." Such results are shown in Table 1.

Further, by varying the depth of the stamper using the same method, the water repellent anti-reflective structure bodies according to the present embodiment having an aspect ratio of 2.0 (thirteenth embodiment), 2.5 (fourteenth embodiment) and 3.0 (fifteenth embodiment) can be obtained. The results are shown in Table 1.

The sixteenth embodiment is now described. By using commercially available electron beam lithography device, a stamper is manufactured wherein cone-shaped concave portions having an opening diameter of 250nm and a depth of 375nm are squarely arranged at a pitch of 250nm. By using such a stamper, a fine structure is transferred to both surfaces of an acryl plate having a contact angle with water of 92˚ and a thickness of 2mm. The fine structure comprises cone-shaped projections (aspect ratio: 1.5), which have a bottom surface diameter D of 250nm, a height H of 375nm and are squarely arranged at a pitch P of 250nm. By doing so, the water repellent anti-reflective structure according to the present embodiment can be obtained.

Using the same performance evaluation, the average reflectivity is 1.0%, the contact angle of water drop on a surface of the water repellent anti-reflective structure is 120˚, the water repellent property is "O," and the durability is "O." Such results are shown in Table 1.

Further, by varying the depth of the stamper using the same method, the water repellent anti-reflective structure bodies according to the present embodiment having an aspect ratio of 2.0 (seventeenth embodiment), 2.5 (eighteenth embodiment) and 3.0 (nineteenth embodiment) can be obtained. The results are shown in Table 1.

The following comparison examples were tested and the results are tabulated in Table 1 to exemplify the significant gains in reducing reflection and increasing repellency achieved by the embodiments of the invention.

For the first comparison example, by using commercially available electron beam lithography, a stamper is manufactured wherein cone-shaped concave portions having an opening diameter of 250nm and a depth of 250nm are hexagonally and most densely arranged at a pitch of 250nm. By applying an ultraviolet ray hardened acryl monomer to the stamper and then irradiating ultraviolet ray thereto, an anti-reflective structure is transferred to both surfaces of an acryl plate having a thickness of 2 mm. The anti-reflective structure comprises cone-shaped projections (aspect ratio: 1.0) having a bottom surface diameter D of 250nm, a height H of 250nm and hexagonally arranged at a pitch P of 250nm. Then, by performing the water repellent process via the vacuum deposition method as above (NANOS B available from T & K Company, contact angle: 116°), the anti-reflective structure according to this example is obtained.

Using the same performance evaluation that was performed for the anti-reflective structure bodies obtained in the embodiments, the average reflectivity is 0.92% and the contact angle of water drop on a surface of the anti-reflective structure is 134°. Further, the water repellent property is "O," and the durability is "O." Such results are indicated in Table 1.

For the second comparison example, by using commercially available electron beam lithography, a stamper is manufactured wherein cone-shaped concave portions having an opening diameter of 300nm, a depth of 330nm and a shape of a ridge line indicated by Formula 1 (n = 1.5) are hexagonally arranged at a pitch of 300nm. By applying an ultraviolet ray hardened acryl monomer to the stamper and then irradiating ultraviolet ray thereto, a fine structure is transferred to both surfaces of an acryl plate having a thickness of 2 mm. The fine structure comprises cone-shaped projections (aspect ratio: 1.1) having a bottom surface diameter D of 300nm, a height H of 330nm and hexagonally arranged at a pitch P of 300nm. Then, by performing the water repellent process via the vacuum deposition method as above (NANOS B available from T & K Company, contact angle: 116°), the structure according to the second comparison example is obtained.

Using the same performance evaluation, the average reflectivity is 0.9% and the contact angle of water drop on a surface of the structure is 136°. The water repellent property is "O" and the durability is "O." Further, by varying the depth of the stamper using the same method, water repellent anti-reflective structure bodies having an aspect ratio of 1.4 (third comparison example) are obtained. Such results are indicated in Table 1.

For the fourth comparison example, by using commercially available electron beam lithography, a stamper is manufactured wherein cone-shaped concave portions having an opening diameter of 250nm and a depth of 250nm are hexagonally and most densely arranged at a pitch of 250nm. By using such a stamper, a water repellent anti-reflective structure is transferred to both surfaces of a perfluoroalkyl methacrylate plate having a thickness of 2 mm and a contact angle with water of 110°. The water repellent anti-reflective structure comprises cone-shaped projections (aspect ratio: 1) having a bottom surface diameter D of 250nm, a height H of 250nm and hexagonally and most densely arranged at a pitch P of 250nm. By doing so, the water repellent anti-reflective structure according to the fourth comparison example is obtained.

Using the performance evaluation, the average reflectivity is 0.95% and the contact angle of water drop on a surface of the water repellent anti-reflective structure is 129°. Further, the water repellent property as well as the durability is "○". By varying the depth of the stamper using the same method, the water repellent anti-reflective structure bodies according to this example having an aspect ratio of 1.1 (fifth comparison example) and 1.4 (sixth comparison example) can be obtained. Such results are indicated in Table 1.

For the seventh comparative example, using commercially available electron beam lithography, a stamper is manufactured wherein cone-shaped concave portions having an opening diameter of 500nm and a depth of 500nm is squarely arranged at a pitch of 200nm. By using such a stamper, a fine structure is transferred to both surfaces of a fluorine-graft-polymerized acryl plate having a contact angle with water of 100° and a thickness of 2mm. The fine structure comprises a cone-shaped projection (aspect ratio: 1) having a bottom surface diameter D of 500nm, a height H of 500nm, and squarely arranged at a pitch P of 500nm. By doing so, the structure according to the present example is obtained.

Using the performance evaluation, the average reflectivity is 0.98% and the contact angle with water is 120°. Further, the water repellent property is "O" and the durability is "O." By varying the depth of the stamper using the same method, the water repellent anti-reflective structure bodies according to this example and having an aspect ratio of 1.1 (eighth comparison example) and 1.4 (ninth comparison example) can be obtained. Such results are indicated in Table 1.

For the tenth comparison example, using commercially available electron beam lithography, a stamper is manufactured wherein cone-shaped concave portions having an opening diameter of 250nm and a depth of 250nm is squarely arranged at a pitch of 250nm. By using such a stamper, a fine structure is transferred to both surfaces of acryl plate having a contact angle with water of 92° and a thickness of 2mm. The fine structure comprises a cone-shaped projection (aspect ratio: 1) having a bottom surface diameter D of 250nm, a height H of 250nm, and squarely arranged at a pitch P of 250nm. By doing so, the structure according to the present example is obtained.

Using the same performance evaluation, the average reflectivity is 1.19% and the contact angle with water is 112˚. Further, the water repellent property is "O " and the durability is "O." By varying the depth of the stamper using the same method, the water repellent anti-reflective structure bodies according to this example and having an aspect ratio of 1.1 (eleventh comparison example) and 1.4 (twelfth comparison example) can be obtained. Such results are indicated in Table 1.

For the thirteenth comparison example, the performance evaluation (same as above) is performed for an acryl-manufactured flap plate having a reflectivity of 7%, a contact angle with water of 102˚ and a thickness of 2mm. As a result, the water repellent property is "X."

To confirm the effect of the aspect ratio of the cone-shaped projections with respect to the water repellent property in the water repellent anti-reflective structure, a value was obtained with respect to the first to nineteenth embodiments and first to twelfth comparison examples by the following: subtracting the contact angle of the material used from the contact angle of the obtained water repellent anti-reflective structure, labeled "Δ" in FIG. 4 and Table 1. Included in FIG. 4, although not shown in Table 1, is an additional evaluation with the same test method using a material with a contact angle of 118˚ with water.

As shown in FIG. 4, when the aspect ratio of the cone-shaped projection in the water repellent anti-reflective structure is equal to or greater than 1.5, "Δ" the contact angle increase of the water repellent anti-reflective structure, is rapidly increased. As seen in Table 1, the resulting contact angle of the water repellent anti-reflective structure with water becomes equal to or greater than 120˚. Further, since the average reflectivity of the water repellent anti-reflective structure is equal to or less than 1%, the water repellent anti-reflective structure of the present invention can combine the anti-reflective property and the water repellent property.

When the contact angle of the material used with water is equal to or greater than 110˚, the effect of the aspect ratio of the cone-shaped projection of the water repellent anti-reflective structure as the water repellent property is improved. Thus, when the contact angle of the material on the surface of the structure with water becomes equal to or greater than 110˚, the contact angle of the water repellent anti-reflective structure with water becomes equal to or greater than 142˚ and the average reflectivity of the water repellent anti-reflective structure is equal to or less than 0.71%. As such, the water repellent anti-reflective structure disclosed herein combines the anti-reflective property with the superior water repellent property.

As shown in Table 1, when the aspect ratio of the cone-shaped projection in the water repellent anti-reflective structure becomes equal to or greater than 2, the average reflectivity of the water repellent anti-reflective structure becomes equal to or less than 0.41 %, with the anti-reflectivity improving to as low as 0.05% when the contact angle of the material used increases to 116˚. Thus, the water repellent anti-reflective structure disclosed herein combines even more superior anti-reflective property with excellent water repellent property.

In addition, as shown in Table 1, when the aspect ratio of the cone-shaped projection in the water repellent anti-reflective structure becomes equal to 4, the durability is decreased. Therefore, when considering the durability, it is preferred that the aspect ratio of the cone-shaped projection is less than 4.

Table 1

| Division | Cone-shaped projection | | | | | Anti-reflective and water repellent property | | | Anti-reflective property | Durability | Δ((Contact angle with water)-(Contact angle of the material with water)) |
|---|---|---|---|---|---|---|---|---|---|---|---|
| | Contact angle of the material with water (°) | Diameter of a bottom D (nm) | Height H (nm) | Aspect ratio | Pitch P (nm) | Average reflectivity (%) | Contact angle with water(°) | Water repellency | | | |
| First Embodiment | 118 | 250 | 375 | 1.5 | 250 | 0,65 | 145 | ◎ | ○ | ◎ | 27 |
| First Comparison Example | 116 | 250 | 250 | 1 | 250 | 0.92 | 134 | ○ | ○ | ○ | 18 |
| Second Comparison Example | 116 | 300 | 330 | 1.1 | 300 | 0.9 | 136 | ○ | ○ | ○ | 20 |
| Third Comparison Example | 116 | 250 | 350 | 1.4 | 250 | 0.71 | 140 | ○ | ○ | ○ | 24 |
| Second Embodiment | 116 | 250 | 375 | 1.5 | 250 | 0.68 | 144 | ◎ | ○ | ◎ | 28 |
| Third Embodiment | 116 | 250 | 500 | 2 | 250 | 0.09 | 164 | ◎ | ◎ | ◎ | 48 |
| Fourth Embodiment | 116 | 250 | 625 | 2.5 | 250 | 0.09 | 166 | ◎ | ◎ | ◎ | 50 |
| Fifth Embodiment | 116 | 250 | 750 | 3 | 250 | 0.08 | 172 | ◎ | ◎ | ◎ | 56 |
| Sixth Embodiment | 116 | 250 | 1000 | 4 | 250 | 0.05 | 172 | ◎ | ◎ | × | 56 |
| Fourth Comparison Example | 110 | 250 | 250 | 1 | 250 | 0.95 | 129 | ○ | ○ | ○ | 19 |

(continued)

| Division | Cone-shaped projection | | | | | Anti-reflective and water repellent property | | | Anti-reflective property | Durability | Δ((Contact angle with water)-(Contact angle of the material with water)) |
| | Contact angle of the material with water (˚) | Diameter of a bottom D | Height H | Aspect ratio | Pitch P | Average reflectivity | Contact angle with water(˚) | Water repellency | | | |
| | | (nm) | (nm) | | (nm) | (%) | | | | | |
| Firth Comparison Example | 110 | 250 | 275 | 1.1 | 250 | 0.93 | 131 | ○ | ○ | ○ | 21 |
| Sixth Comparison Example | 110 | 250 | 350 | 1.4 | 250 | 0.76 | 136 | ○ | ○ | ○ | 26 |
| Seventh Embodiment | 110 | 250 | 375 | 1.5 | 250 | 0.71 | 142 | ◎ | ○ | ◎ | 32 |
| Eighth Embodiment | 110 | 250 | 500 | 2 | 250 | 0.13 | 161 | ◎ | ◎ | ◎ | 51 |
| Ninth Embodiment | 110 | 250 | 500 | 2 | 250 | 0.41 | 161 | ◎ | ◎ | ◎ | 51 |
| Tenth Embodiment | 110 | 250 | 625 | 2.5 | 250 | 0.09 | 163 | ◎ | ◎ | ◎ | 53 |
| Eleventh Embodiment | 110 | 250 | 750 | 3 | 250 | 0.08 | 165 | ◎ | ◎ | ◎ | 55 |
| Seventh Comparison Example | 100 | 500 | 500 | 1 | 500 | 0.98 | 120 | ○ | ○ | ○ | 20 |
| Eighth Comparison Example | 100 | 250 | 275 | 1.1 | 250 | 0.96 | 122 | ○ | ○ | ○ | 22 |
| Ninth Comparison Example | 100 | 250 | 350 | 1.4 | 250 | 0.82 | 126 | ○ | ○ | ○ | 26 |

EP 1 921 470 A2

| Division | Cone-shaped projection | | | | | Anti-reflective and water repellent property | | | Anti-reflective property | Durability | Δ((Contact angle with water)-(Contact angle of the material with water)) |
|---|---|---|---|---|---|---|---|---|---|---|---|
| | Contact angle of the material with water (°) | Diameter of a bottom D (nm) | Height H (nm) | Aspect ratio | Pitch P (nm) | Average reflectivity (%) | Contact angle with water(°) | Water repellency | | | |
| Twelfth Embodiment | 100 | 250 | 375 | 1.5 | 250 | 0.8 | 128 | ○ | ○ | ○ | 28 |
| Thirteenth Embodiment | 100 | 250 | 500 | 2 | 250 | 0.34 | 139 | ○ | ◎ | ○ | 39 |
| Fourteenth Embodiment | 100 | 200 | 500 | 2.5 | 200 | 0.28 | 140 | ○ | ◎ | ○ | 40 |
| Fifteenth Embodiment | 100 | 250 | 750 | 3 | 250 | 0.25 | 141 | ○ | ◎ | ○ | 41 |
| Tenth Comparison Example | 92 | 250 | 250 | 1 | 250 | 1.19 | 112 | × | × | × | 20 |
| Eleventh Comparison Example | 92 | 250 | 275 | 1.1 | 250 | 1.15 | 114 | × | × | × | 22 |
| Twelfth Comparison Example | 92 | 250 | 350 | 1.4 | 250 | 1.03 | 118 | ○ | × | ○ | 26 |
| Sixteenth Embodiment | 92 | 250 | 375 | 1.5 | 250 | 1 | 120 | ○ | ○ | ○ | 28 |
| Seventeenth Embodiment | 92 | 250 | 500 | 2 | 250 | 0.38 | 128 | ○ | ◎ | ○ | 36 |
| Eighteenth Embodiment | 92 | 250 | 625 | 2.5 | 250 | 0,33 | 129 | ○ | ◎ | ○ | 37 |

EP 1 921 470 A2

(continued)

| Division | Cone-shaped projection | | | | | Anti-reflective and water repellent property | | | Anti-reflective property | Durability | $\Delta$((Contact angle with water)-(Contact angle of the material with water)) |
|---|---|---|---|---|---|---|---|---|---|---|---|
| | Contact angle of the material with water (°) | Diameter of a bottom D (nm) | Height H (nm) | Aspect ratio | Pitch P (nm) | Average reflectivity (%) | Contact angle with water(°) | Water repellency | | | |
| Nineteenth Embodiment | 92 | 250 | 750 | 3 | 250 | 0.29 | 130 | ○ | ◎ | ○ | 38 |
| Thirteenth Comparison Example | 102 | - | - | - | - | 7 | 102 | × | × | - | 0 |

EP 1 921 470 A2

Accordingly, the above-described embodiments have been described in order to allow easy understanding of the invention and do not limit the invention. On the contrary, the invention is intended to cover various modifications and equivalent arrangements included within the scope of the appended claims, which scope is to be accorded the broadest interpretation so as to encompass all such modifications and equivalent structure as is permitted under the law.

This application claims priority from Japanese Patent Application Serial Nos. 2006-302710, filed 8th November 2006, 2007-187951, filed 19th July 2007 and 2007-262897, filed 9th October 2007, the contents of each of which are expressly incorporated herein by reference.

**Claims**

1. A structure, comprising:

   a material with a contact angle with water of at least 90˚;
   a plurality of cone-shaped projections formed of the material, the cone-shaped projections having a circular or polygonal bottom surface with a diameter between 50 and 380 nm and a height;

   wherein the cone-shaped projections are arranged at a pitch between 50 and 380 nm; and
   wherein the height is such that an aspect ratio of the cone-shaped projections is 1.5 or greater.

2. A structure as claimed in claim 1 wherein the aspect ratio of the cone-shaped projections is between 2 and 3.

3. A structure as claimed in claim 1 or claim 2, wherein the material has a contact angle with water of at least 110˚.

4. A structure as claimed in any preceding claim, wherein the material comprises a base material layered with the material with a contact angle with water of at least 90˚.

5. A structure as claimed in any preceding claim, wherein the cone-shaped projections are squarely arranged or hexagonally arranged.

6. A structure as claimed in any preceding claim wherein, when a base of a perpendicular cross-section through an apex of a cone-shaped projection is taken on an X-axis and the apex thereof is taken on a Z-axis, a z-coordinate value on a ridge line of the cone-shaped projection is indicated by an equation:

$$Z = H - \{H/(D/2)n\} \times Xn \; ;$$

   wherein:

   H is a height of the cone-shaped projection;
   D is a diameter of a bottom surface of the cone-shaped projection; and
   n is between 1.1 and 5.

7. A water llent, anti-reflective structure body, comprising:

   a structure as claimed in any preceding claim; and
   at least one substrate;

   wherein the water repellent anti-reflective structure is arranged on at least one surface of said substrate.

8. A body as claimed in claim 7, wherein the substrate is transparent.

9. A method of manufacturing a structure as claimed in any preceding claim, comprising forming the cone-shaped projections on the material by a hot embossing process.

10. A method of manufacturing a structure as claimed in any of claims 2 to 8, comprising:

interposing a resin between a mold and the material, wherein the mold comprises an inverted structure of the cone-shaped projections; and

hardening the resin by irradiating an active energy beam on the interposed resin.

11. A vehicle, or a component of a vehicle, comprising a structure or a body as claimed in any of claims 1 to 8.

**FIG. 1A**

**FIG. 1B**

**FIG. 2**

**FIG. 3**

$$Z = H - \{H/(D/2)^2\} \times X^n$$

**FIG. 4**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006178147 A
- JP 2006302710 A
- JP 2007187951 A
- JP 2007262897 A